(19) **Europäisches Patentamt European Patent Office Office européen des brevets**

(11) **EP 3 950 793 B1**

(12) **EUROPEAN PATENT SPECIFICATION**

(45) Date of publication and mention of the grant of the patent:
**27.05.2026 Bulletin 2026/22**

(21) Application number: **20779239.1**

(22) Date of filing: **24.03.2020**

(51) International Patent Classification (IPC):
*C08J 9/12* (2006.01)     *B29C 44/00* (2006.01)
*B29C 44/50* (2006.01)     *B29C 48/00* (2019.01)
*B29K 67/00* (2006.01)     *C08J 9/00* (2006.01)
*C08J 9/14* (2006.01)      *C08J 9/36* (2006.01)

(52) Cooperative Patent Classification (CPC):
**B29C 44/507; B29C 48/0012; B29C 48/022;
C08J 9/0023; C08J 9/0066; C08J 9/141;
C08J 9/36;** B29K 2067/046; C08J 2201/026;
C08J 2201/03; C08J 2203/14; C08J 2205/052;
C08J 2367/04

(86) International application number:
**PCT/IB2020/052724**

(87) International publication number:
**WO 2020/194172 (01.10.2020 Gazette 2020/40)**

(54) **POLYLACTIC ACID RESIN EXPANDED SHEET, RESIN MOLDED ARTICLE, AND METHOD FOR PRODUCING POLYLACTIC ACID RESIN EXPANDED SHEET**

EXPANDIERTE POLYMILCHSÄUREHARZFOLIE, HARZFORMARTIKEL UND VERFAHREN ZUR HERSTELLUNG EINER EXPANDIERTEN POLYMILCHSÄUREHARZFOLIE

FEUILLE EXPANSÉE DE RÉSINE D'ACIDE POLYLACTIQUE, ARTICLE MOULÉ EN RÉSINE ET PROCÉDÉ DE PRODUCTION DE FEUILLE EXPANSÉE DE RÉSINE D'ACIDE POLYLACTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2019 JP 2019058551**

(43) Date of publication of application:
**09.02.2022 Bulletin 2022/06**

(73) Proprietor: **Sekisui Kasei Co., Ltd.**
**Kita-ku**
**Osaka-shi**
**Osaka 530-8565 (JP)**

(72) Inventors:
• **FUKUYAMA, Eiji**
  **Osaka, Osaka 530-8565 (JP)**
• **ENDO, Shota**
  **Osaka, Osaka 530-8565 (JP)**
• **MORI, Ayano**
  **Osaka, Osaka 530-8565 (JP)**

(74) Representative: **Hoffmann Eitle**
**Patent- und Rechtsanwälte PartmbB**
**Arabellastraße 30**
**81925 München (DE)**

(56) References cited:
WO-A1-2015/046259     JP-A- 2003 183 433
JP-A- 2004 059 608     JP-A- 2004 359 910
JP-A- 2006 348 060     JP-A- 2007 246 610
JP-A- 2009 012 201     JP-A- 2011 006 577
JP-A- 2013 221 096     JP-A- 2015 218 327

**Description**

TECHNICAL FIELD

The present invention relates to a polylactic acid resin expanded sheet, a resin molded article, and a method for producing the polylactic acid resin expanded sheet.

The present application claims the priority based on Japanese Patent Application No. 2019-058551 filed on March 26, 2019.

BACKGROUND TECHNOLOGY

Conventionally, since a polyester resin expanded article is lightweight, is excellent in cushioning property, and moreover, can be easily formed and processed into a variety of shapes, it is utilized as a raw material of various molded articles including, for example, a packaging material.

In recent years, measures against a problem that the landscape is impaired by packaging materials that are illegally discarded in places such as hills and fields, rivers, and coasts are demanded.

Under such backgrounds, preparation of a molded article using a polylactic acid resin that can be biodegraded in the natural environment is being examined, and development of a polylactic acid resin expanded article in various applications is being examined.

For example, a resin molded article that has been processed into a three-dimensional shape by thermoforming a polylactic acid resin expanded sheet is utilized in various applications.

Meanwhile, a polylactic acid resin has crystallizability.

A polylactic acid resin in a crystallized state exerts high mechanical strength as compared with a polylactic acid resin in an amorphous state.

For that reason, when a resin molded article is prepared with the polylactic acid resin, in addition to the polylactic acid resin usable as a base polymer, a resin composition containing a crystal nucleating agent and a crystallization accelerator is used.

Patent Document 2 describes a polylactic acid-based resin composition comprising 100 parts by mass of a polylactic acid resin (A) having a D isomer content of $\leq 2.0$ mol% or $\geq 98.0$ mol%, 0.03-5 parts by mass of at least one of fatty acid amide derivatives and sulfonic acid salt compounds as an organic nucleating agent (B), 0.1-10 parts by mass of at least one of glycerol fatty acid esters and adipic acid esters as a plasticizer (C), and a (meth)acrylate compound (D) having two or more (meth)acryl groups, or one or more (meth)acrylic groups and one or more glycidyl groups or vinyl groups in the molecule.

PRIOR ART DOCUMENTS

Patent Document

Patent Document 1: Japanese Domestic Re-Publication of PCT International Application WO 2006/121056
Patent Document 2: JP 2013/221096 A

SUMMARY OF THE INVENTION

PROBLEM TO BE SOLVED BY THE INVENTION

If a sheet is prepared by a producing method accompanying rapid cooling from a thermally molten state, as is the case of a polylactic acid resin expanded sheet, this results in that crystallizable molecules are present in the sheet in the amorphous state. When a resin molded article is formed with the polylactic acid resin expanded sheet, the resin molded article is thermally deformed, and may be unable to retain a predetermined shape.

On the other hand, if a polylactic acid resin expanded sheet is brought into a sufficiently crystallized state, when the sheet is, for example, subjected to thermoforming, trackability to a forming die is not sufficiently exerted, and a resin molded article may hardly have a predetermined shape from the beginning.

That is, the conventional polylactic acid resin expanded sheet has a problem that it is difficult to form a resin molded article that can easily retain a predetermined shape.

Therefore, an object of the present invention is to provide a polylactic acid resin expanded sheet useful for forming a resin molded article that can easily retain a predetermined shape and a method for producing the same, and consequently, a resin molded article that can easily retain a predetermined shape.

MEANS FOR SOLVING THE PROBLEM

In order to solve the above-mentioned problems, the present inventors have made intensive studies, and found out that by containing a crystal nucleating agent and a crystallization accelerator at a predetermined ratio, a polylactic acid resin expanded sheet comes to have a crystallization degree, at which it can easily show good formability, for example, in thermoforming, resulting in completion of the present invention.

That is, the present invention for solving the above-mentioned problems provides a polylactic acid resin expanded sheet comprising a polylactic acid resin, a crystal nucleating agent, and a crystallization accelerator,

wherein the polylactic acid resin expanded sheet contains 0.5 part by mass or more and less than 3.0 parts by mass of the crystal nucleating agent, and 0.5 part by mass or more and less than 5.0 parts by mass of the crystallization accelerator, based on 100 parts by mass of the polylactic acid resin,

wherein only an inorganic crystal nucleating agent is used as said crystal nucleating agent,

said crystallization accelerator is polyglycerin fatty acid ester,

the polylactic acid resin is not completely crystallized and is in a state where crystallization progresses by heating to a glass transition initiation temperature or higher,

a crystallization degree of the polylactic acid resin expanded sheet is 20% or less, and

the polylactic acid resin expanded sheet shows a crystallization degree of 25% or more by being heated to a glass transition initiation temperature or higher,

wherein the crystallization degree is determined in accordance with the method described in section (Crystallization Degree) below.

Also, the present invention provides a resin molded article in which a part or all of the resin molded article includes the polylactic acid resin expanded sheet as described above.

Further, the present invention provides a method for producing a polylactic acid resin expanded sheet, which comprises an extrusion step of extrusion expanding a resin composition containing a polylactic acid resin together with a blowing agent to prepare a polylactic acid resin expanded sheet,

the method further comprising a modification step of reacting polylactic acid resins together using an organic peroxide as a radical initiator to prepare a modified polylactic acid resin,

wherein in the modification step, the modified polylactic acid resin having a melt tension at 190°C of 5 cN or more and 40 cN or less is prepared using the organic peroxide at a ratio of 0.1 part by mass or more and 2 parts by mass or less, based on 100 parts by mass of the polylactic acid resin, and

in the extrusion step, a part or all of the polylactic acid resin is the modified polylactic acid resin, and the polylactic acid resin expanded sheet is prepared using the resin composition containing 0.5 part by mass or more and less than 3.0 parts by mass of a crystal nucleating agent and 0.5 part by mass or more and less than 5.0 parts by mass of a crystallization accelerator, based on 100 parts by mass of the polylactic acid resin

wherein only an inorganic crystal nucleating agent is used as said crystal nucleating agent,

wherein said crystallization accelerator is polyglycerin fatty acid ester, and

wherein the melt tension is determined in accordance with the method described in section (Method of Measuring Melt Tension) below.

EFFECTS OF INVENTION

According to the present invention, there can be provided a polylactic acid resin expanded sheet useful for forming a resin molded article that can easily retain a predetermined shape and a method for producing the same, as well as a resin molded article that can easily retain a predetermined shape.

BRIEF DESCRIPTION OF THE DRAWINGS

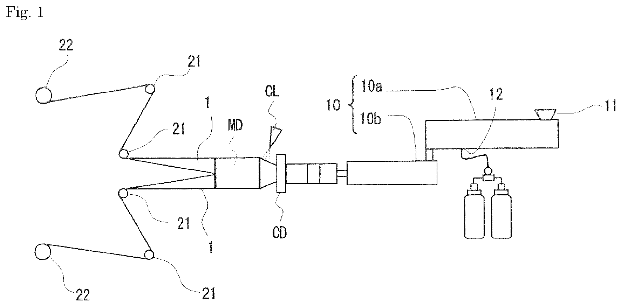

Fig. 1 is a schematic view showing a configuration of an apparatus for producing a polylactic acid resin expanded sheet.

BEST MODE FOR CARRYING OUT THE INVENTION

Embodiments of the present invention will be described below.

Below, the present invention will be described using a main example in which a polylactic acid resin expanded sheet is an extrusion-expanded sheet that is prepared by an extrusion expansion method.

A polylactic acid resin expanded sheet of the present embodiment (hereinafter, also simply referred to as "expanded sheet") is an extrusion-expanded sheet as described above.

That is, the expanded sheet of the present embodiment is prepared by melting and kneading a resin composition containing a polylactic acid resin as a main component together with a blowing agent by an extruder, and thereafter, extruding the kneaded product into the atmospheric air through a die attached to a tip of the extruder.

It is preferable that a polylactic acid resin of the present embodiment is modified in order to introduce the branch structure and the crosslinked structure, from a view point that the expanded sheet is brought into the good expanded state.

That is, it is preferable that a part or all of the polylactic acid resin contained in the above-mentioned resin composition to be supplied to extrusion expansion is a modified polylactic acid resin (hereinafter, also referred to as "modified polylactic acid resin").

In the present embodiment, a polylactic acid resin before modification (hereinafter, also referred to as "unmodified polylactic acid resin"), which is a raw material of the above-mentioned modified polylactic acid resin, may be a homopolymer of lactic acid, or may be a copolymer of lactic acid and other monomer.

Examples of other monomer in the above-mentioned copolymer include aliphatic hydroxycarboxylic acids other than lactic acid, aliphatic polyhydric alcohols, and aliphatic polycarboxylic acids.

The above-mentioned another monomer may be, for example, polyfunctional polysaccharides.

Lactic acid constituting the above-mentioned unmodified polylactic acid resin may be any one of an L-isomer and a D-isomer, or both of them.

That is, the above-mentioned unmodified polylactic acid resin that is the above-mentioned homopolymer may be any of a poly(L-lactic acid) resin, a poly(D-lactic acid) resin, and a poly(DL-lactic acid) resin.

Examples of the aliphatic polycarboxylic acid constituting the above-mentioned copolymer include, for example, oxalic acid, succinic acid, malonic acid, glutaric acid, adipic acid, pimelic acid, suberic acid, azelaic acid, undecanedioic acid, and dodecanedioic acid.

The aliphatic polycarboxylic acid may be an andydride.

Examples of the above-mentioned aliphatic polyhydric alcohol include, for example, ethylene glycol, diethylene glycol, triethylene glycol, propylene glycol, dipropylene glycol, 1,3-butanediol, 1,4-butanediol, 3-methyl-1,5-pentanediol, 1,6-hexanediol, 1,9-nonanediol, neopentyl glycol, tetramethylene glycol, and 1,4-cyclohexanedimethanol.

Examples of the aliphatic hydroxycarboxylic acid other than lactic acid, which constitutes the above-mentioned copolymer, include, for example, glycolic acid, 3-hydroxybutyric acid, 4-hydroxybutyric acid, 4-hydroxyvaleric acid, 5-hydroxyvaleric acid, and 6-hydroxycaproic acid.

Examples of the above-mentioned polyfunctional polysaccharides include, for example, cellulose, cellulose nitrate, methylcellulose, ethylcellulose, celluloid, viscose rayon, regenerated cellulose, cellophane, cupra, cuprammonium rayon, cuprophane, Bemberg, hemicellulose, starch, acropectin, dextrin, dextran, glycogen, pectin, chitin, chitosan, arabic gum, guar gum, locust bean gum, and acacia gum.

The above-mentioned unmodified polylactic acid resin in the present embodiment is preferably such that a structural part derived from lactic acid (L-isomer and D-isomer) is contained in a molecule at a ratio of 50% by mass or more.

The content of the above-mentioned structural part (L-isomer and D-isomer) is more preferably 60% by mass or more, further preferably 70% by mass or more, particularly preferably 80% by mass or more.

The above-mentioned unmodified polylactic acid resin can be made into a modified polylactic acid resin by reacting the above-mentioned polylactic acid resins together using a radical initiator such as an organic peroxide.

It is preferable that the above-mentioned modified polylactic acid resin of the present embodiment is prepared so as to show specific characteristic values in measurement of the melt tension at 190°C and measurement of the elongational viscosity at the same temperature.

Specifically, the modified polylactic acid resin shows the melt tension of 5 cN or more and 40 cN or less in measurement of the melt tension at 190°C.

The above-mentioned melt tension of the modified polylactic acid resin is preferably 39 cN or less, more preferably 37 cN or less, particularly preferably 35 cN or less.

The above-mentioned melt tension of the modified polylactic acid resin is preferably 8 cN or more, more preferably 10 cN or more.

The modified polylactic acid resin of the present embodiment can suppress foam breakage when an expanded sheet is prepared by extrusion expansion using the above-mentioned resin composition, by the melt tension being 5 cN or more.

The modified polylactic acid resin of the present embodiment can suppress foam breakage by good elongation of a foam film shown at expansion, by the melt tension being 40 cN or less.

The melt tension of the modified polylactic acid resin or the unmodified polylactic acid resin at 190°C can be measured using a twin-bore type capillary rheometer "Rheologic 5000T" (manufactured by CEAST) as follows:

(Method of Measuring Melt Tension)

Each sample is vacuum-dried at 80°C for 5 hours, thereafter, sealed, and stored in a desiccator until immediately before measurement.

A measurement sample resin is filled into a barrel having a diameter of 15 mm, which has been heated at a test temperature of 190°C, and is pre-heated for 5 minutes. Thereafter, the pre-heated sample is extruded into a string form from a capillary die (caliber 2.095 mm, length 8 mm, inflow angle 90 degree (conical)) of the above-mentioned measuring device while a piston descending speed (0.07730 mm/s) is retained constant, this string-form product is passed through a tension detection pulley positioned 27 cm below the above-mentioned capillary die, and thereafter, is wound using a wind-up roll while a winding speed thereof is gradually increased at an initial speed of 4.0 mm/s and acceleration of 12 mm/s$^2$. An average of a maximum value and a minimum value immediately before breakage of the string-form product is employed as a melt tension of the sample.

In addition, when the number of maximum points on a tension chart is only one, its maximum value is employed as the melt tension.

It is preferable that the modified polylactic acid resin shows suitable flowability at thermal melting, and it is preferable that a melt mass flow rate (MFR) is 0.5 g/10 min or more.

MFR of the modified polylactic acid resin is more preferably 1.0 g/10 min or more, further preferably 1.5 g/10 min or more, particularly preferably 2.0 g/10 min or more.

The above-mentioned MFR is preferably 20 g/10 min or less, more preferably 10 g/10 min or less, particularly preferably 6.0 g/10 min or less.

A melt mass flow rate (MFR) of the modified polylactic acid resin or the unmodified polylactic acid resin can be measured using, for example, "Melt Flow Index Tester (automatic) 120-SAS" manufactured by YASUDA SEIKI SEISAKUSHO, LTD.

MFR is measured in accordance with b) a method of measuring the time for which the piston moves a predetermined distance described in the method B of JIS K7210-1: 2014 "Plastics - Determination of the melt mass-flow rate (MFR) and melt volume-flow rate (MVR) of thermoplastics - Part 1".

The measuring conditions are as follows:

· Sample: 3 to 8 g

In addition, a sample for measurement is vacuum-dried at 80°C for 5 hours, and after drying, sealed and stored in a desiccator until immediately before measurement.

· Pre-heating: 300 seconds
· Load hold: 30 seconds
· Test temperature: 190°C
· Test load: 2.16 kg (21.18 N)

The sample is tested three times, and an average thereof is employed as a value of a melt mass flow rate (g/10 min).

When the above-mentioned unmodified polylactic acid resin is modified, not only a radical initiator but also a chain extender such as carbodiimide may be used.

Modification with the chain extender can be performed using a compound having one or a plurality of functional groups that can condense with a hydroxy group or a carboxyl group present in the molecular structure of the polylactic acid resin, such as an acrylic-based organic compound, an epoxy-based organic compound, and an isocyanate-based organic compound.

That is, the above-mentioned modification can be carried out by a method of binding, for example, an acrylic-based organic compound, an epoxy-based organic compound, or an isocyanate-based organic compound to a polylactic acid resin by a reaction.

Modification of the polylactic acid resin by crosslinking or long chain branching can be performed by a method of reacting polylactic acid resins together by the radical initiator, as described above.

Among the above-mentioned modification methods, it is preferable to react polylactic acid resins together by the radical initiator, in that other components can be inhibited from being contained in the expanded sheet.

In addition, when polylactic acid resins are reacted together using the radical initiator having the suitable reactivity, a degradation starting point of the polylactic acid resin in the extruder is attacked by a free radical generated by the above-mentioned radical initiator, the position becomes a crosslinked point (branching point), and the resin is stabilized.

In the polylactic acid resin, the thermal stability is increased by such modification, and reduction in a molecular weight becomes difficult when the resin passes through the extruder.

Examples of the above-mentioned radical initiator used in modification of the polylactic acid resin include, for example, organic peroxides, azo compounds, and halogen molecules.

Among them, an organic peroxide is preferable.

Examples of the organic peroxide used in the present embodiment include, for example, peroxyester, hydroperoxide, dialkyl peroxide, diacyl peroxide, peroxydicarbonate, peroxyketal, and ketone peroxide.

Examples of the above-mentioned peroxyester include, for example, t-butylperoxy 2-ethylhexyl carbonate, t-hexylperoxy isopropyl monocarbonate, t-hexyl peroxybenzoate, t-butyl peroxybenzoate, t-butyl peroxylaurate, t-butyl peroxy-3,5,5-trimethylhexanoate, t-butyl peroxyacetate, 2,5-dimethyl-2,5-di(benzoylperoxy)hexane, and t-butyl peroxyisopropyl monocarbonate.

Examples of the above-mentioned hydroperoxide include, for example, permethane hydroperoxide, diisopropylbenzene hydroperoxide, cumene hydroperoxide, and t-butyl hydroperoxide.

Examples of the above-mentioned dialkyl peroxide include, for example, dicumyl peroxide, di-t-butyl peroxide, and 2,5-dimethyl-2,5-di(t-butylperoxy)hexyne-3.

Examples of the above-mentioned diacyl peroxide include, for example, dibenzoyl peroxide, di(4-methylbenzoyl) peroxide, and di(3-methylbenzoyl) peroxide.

Examples of the above-mentioned peroxydicarbonate include, for example, di(2-ethylhexyl) peroxydicarbonate, and diisopropyl peroxydicarbonate.

Examples of the above-mentioned peroxyketal include, for example, 1,1-di-t-butylperoxy-3,3,5-trimethylcyclohexane, 1,1-di-t-butylperoxycyclohexane, 2,2-di(t-butylperoxy)butane, n-butyl 4,4-di-(t-butylperoxy)valerate, and 2,2-bis(4,4-di-t-butylperoxycyclohexyl)propane.

Examples of the above-mentioned ketone peroxide include, for example, methyl ethyl ketone peroxide and acetylacetone peroxide.

In modification with the above-mentioned organic peroxide, there is a possibility that a component having an excessively large molecular weight, which becomes the gel at thermal melting, is mixed into the modified polylactic acid resin after modification, and a problem of the odor due to the decomposition residue of the organic peroxide is generated.

The above-mentioned organic peroxide is preferably a peroxyester, in that such a problem can be inhibited from being generated, and the polylactic acid resin can be easily modified into the state suitable for expansion.

Among peroxyesters, the organic peroxide used in modification of the polylactic acid resin is preferably a peroxycarbonate-based organic peroxide such as peroxymonocarbonate and peroxydicarbonate.

Among peroxycarbonate-based organic peroxides, the organic peroxide used in modification of the polylactic acid resin in the present embodiment is preferably a peroxymonocarbonate-based organic peroxide, particularly preferably t-butylperoxyisopropyl monocarbonate.

The organic peroxide as described above is usually used at the content of 0.1 part by mass or more based on 100 parts by mass of the unmodified polylactic acid resin to be modified, depending, for example, on a molecular weight thereof.

The content of the above-mentioned organic peroxide is preferably 0.2 part by mass or more, particularly preferably 0.3 part by mass or more.

The content of the organic peroxide is preferably 2.0 parts by mass or less, more preferably 1.5 parts by mass or less, particularly preferably 1.0 part by mass or less.

By modifying the unmodified polylactic acid resin using the organic peroxide at such a content, the modified polylactic acid resin after modification can be made suitable for expansion.

The organic peroxide as described above can more reliably exert the effect due to modification on the polylactic acid resin, by using the content thereof of 0.1 part by mass or more.

On the other hand, the organic peroxide can inhibit interminglement of the gel in the polylactic acid resin after modification, by using the content thereof of 2.0 parts by mass or less.

The polylactic acid resin in the resin composition to be supplied to extrusion expansion may also be a mixture of the modified polylactic acid resin and the unmodified polylactic acid resin.

A ratio of the modified polylactic acid resin occupied in a total amount of the polylactic acid resin in the above-mentioned resin composition is preferably 60% by mass or more, more preferably 70% by mass or more, further preferably 80% by mass or more, particularly preferably 90% by mass or more.

A resin other than the polylactic acid resin may be contained in the above-mentioned resin composition as necessary, and the content of the resin other than the polylactic acid resin is preferably 10% by mass or less, more preferably 5% by mass or less, further preferably 3% by mass or less.

It is preferable that the resin composition to be supplied to extrusion expansion contains a crystal nucleating agent and a crystallization accelerator, together with the above-mentioned polylactic acid resin.

Examples of a crystal nucleating agent include, for example, an organic crystal nucleating agent and an inorganic crystal nucleating agent.

In the polylactic acid expanded sheet and the method for producing a polylactic resin expanded sheet of the present invention only an inorganic crystal nucleating agent is used as the crystal nucleating agent.

When only the inorganic crystal nucleating agent is used as the above-mentioned crystal nucleating agent, only one kind of inorganic crystal nucleating agents listed later may be employed, or two or more kinds may be used together.

Examples of the above-mentioned inorganic crystal nucleating agent include, for example, talc, tin oxide, smectite, bentonite, dolomite, sericite, feldspar powder, kaolin, mica, and montmorillonite.

From a viewpoint of improvement in a crystallization rate, the heat resistance, and the durability, it is preferable that, among these, the above-mentioned inorganic crystal nucleating agent is talc or tin oxide.

Examples of the above-mentioned organic crystal nucleating agent include, for example, organic amide compounds, organic hydrazide compounds, carboxylic acid ester-based compounds, organic sulfonic acid salts, phthalocyanine-based compounds, melamine-based compounds, and organic phosphonic acid salts.

As the organic sulfonic acid salt, various organic sulfonic acid salts such as a sulfoisophthalic acid salt can be used, and among them, a dimethyl 5-sulfoisophthalate metal salt is preferable, from a view point of the crystallization promoting effect.

Further, a barium salt, a calcium salt, a strontium salt, a potassium salt, a rubidium salt, or a sodium salt are preferable.

Examples of the above-mentioned organic amide compound include, for example, N,N',N"-tricyclohexyltrimesic acid amide and N,N'-ethylenebis(12-hydroxystearic acid) amide.

The content of the above-mentioned crystal nucleating agent in the above-mentioned resin composition can be, for example, 0.5 part by mass or more, when the content of the above-mentioned polylactic acid resin contained in the above-mentioned resin composition is 100 parts by mass.

The content of the above-mentioned crystal nucleating agent in the above-mentioned resin composition is preferably 0.6 part by mass or more, more preferably 0.7 part by mass or more.

The content of the above-mentioned crystal nucleating agent in the above-mentioned resin composition can be, for example, less than 3.0 parts by mass, when the content of the above-mentioned polylactic acid resin contained in the above-mentioned resin composition is 100 parts by mass.

The content of the above-mentioned crystal nucleating agent in the above-mentioned resin composition is preferably 2.5 parts by mass or less, more preferably 2.2 parts by mass or less.

Examples of a crystallization accelerator include, for example, phthalic acid derivatives such as di-n-octyl phthalate, di-2-ethylhexyl phthalate, dibenzyl phthalate, diisodecyl phthalate, ditridecyl phthalate, and diundecyl phthalate, isophthalic acid derivatives such as dioctyl isophthalate, adipic acid derivatives such as di-n-butyl adipate and dioctyl adipate, maleic acid derivatives such as di-n-butyl maleate, citric acid derivatives such as tri-n-butyl citrate, itaconic acid derivatives such as monobutyl itaconate, oleic acid derivatives such as butyl oleate, ricinoleic acid derivatives such as glycerin monoricinoleate, phosphoric acid esters such as tricresyl phosphate and trixylenyl phosphate, hydroxy polycarboxylic acid esters such as polyethylene adipate and tributyl polyacrylate acetylcitrate, polyhydric alcohol esters such as glycerin triacetate and glycerin tripropionate, polyalkylene glycol derivatives such as polyethylene glycol and polypropylene glycol, benzyl · 2-(2-methoxyethoxy)ethyl · adipate, and polyglycerin fatty acid ester.

As the above-mentioned crystallization accelerator, polyglycerin fatty acid ester is used in the polylactic acid expanded sheet and the method for producing a polylactic resin expanded sheet of the present invention.

Examples of the above-mentioned polyglycerin fatty acid esters include, for example, polyglycerin oleic acid ester, polyglycerin ricinoleic acid ester, polyglycerin lauric acid ester, polyglycerin stearic acid ester, and polyglycerin condensed ricinoleic acid ester.

As the above-mentioned crystallization accelerator, among these, it is preferable to employ polyglycerin stearic acid ester.

The polyglycerin fatty acid ester is generally utilized as a plasticizer, and can be one that inhibits crystallization to the polylactic acid resin.

However, the polyglycerin fatty acid ester has a function of promoting formation of a crystal nucleus by the polylactic acid resin, and has a function of promoting formation of the crystal nucleus to promote crystallization.

In the present embodiment, as the polylactic acid resin, the modified polylactic acid resin is employed.

That is, since the polylactic acid resin in the present embodiment has the molecular structure such as branching and crosslinking, crystals hardly grow large.

Accordingly, it can be said that the polyglycerin fatty acid ester that does not promote crystal growth, but exerts the function of promoting formation of the crystal nucleus is suitable as the crystallization accelerator used in the present embodiment.

The content of the above-mentioned crystallization accelerator in the above-mentioned resin composition can be, for example, 0.5 part by mass or more, when the content of the above-mentioned polylactic acid resin contained in the above-mentioned resin composition is 100 parts by mass.

The content of the above-mentioned crystallization accelerator in the above-mentioned resin composition is preferably 0.6 part by mass or more, more preferably 0.7 part by mass or more.

The content of the above-mentioned crystallization accelerator in the above-mentioned resin composition can be, for example, less than 5.0 parts by mass, when the content of the above-mentioned polylactic acid resin contained in the above-mentioned resin composition is 100 parts by mass.

The content of the above-mentioned crystallization accelerator in the above-mentioned resin composition is preferably 4.0 parts by mass or less, more preferably 3.5 parts by mass or less.

Various additives can be added to the above-mentioned resin composition as necessary.

Examples of the additive include, for example, cell adjusting agents, lubricants, antioxidants, antistatic agents, flame retardants, ultraviolet absorbing agents, light stabilizers, coloring agents, and antibacterial agents.

In addition, the content of the above-mentioned additive is preferably 10 parts by mass or less, more preferably 5 parts by mass or less, based on 100 parts by mass of the polylactic acid resin.

As the above-mentioned blowing agent that is used in extrusion expansion together with the above-mentioned resin composition, a physical blowing agent that becomes the gas at an ambient temperature (23°C) and an ambient pressure (1 atm), or a decomposable blowing agent that generates the gas by thermal decomposition can be employed.

As the above-mentioned physical blowing agent, for example, an inert gas, an aliphatic hydrocarbon, or an alicyclic hydrocarbon can be employed.

Examples of the above-mentioned inert gas include, for example, carbon dioxide and nitrogen.

Examples of the above-mentioned aliphatic hydrocarbon include, for example, propane, normal butane, isobutane, normal pentane, and isopentane, and examples of the above-mentioned alicyclic hydrocarbon include, for example, cyclopentane and cyclohexane.

In the present embodiment, among the above-mentioned examples, particularly, normal butane and isobutane can be preferably used.

Examples of the above-mentioned decomposable blowing agent include, for example, azodicarbonamide, dinitrosopentamethylenetetramine, sodium bicarbonate, or a mixture of an organic acid such as citric acid or a salt thereof and a bicarbonate salt.

When the trackability to the die surface at the time of formation is taken into consideration, it is preferable that the expanded sheet of the present embodiment, which is prepared using the resin composition as described above, is in the state where it exerts softness to a certain degree.

An open cell ratio of the expanded sheet of the present embodiment is preferably 10% or more, more preferably 15% or more.

In order to make the expanded sheet exert the excellent strength, an open cell ratio of the expanded sheet is preferably 50% or less, more preferably 40% or less, particularly preferably 30% or less.

An expansion ratio of the expanded sheet is preferably 3 times or more, more preferably 4 times or more, particularly preferably 4.5 times or more.

In order to exert the excellent strength, the expansion ratio of the expanded sheet is preferably 15 times or less, more preferably 12 times or less, particularly preferably 10 times or less.

An open cell ratio of the expanded sheet is measured by a method shown below.

(Open Cell Ratio)

A plurality of 25 mm length and 25 mm width sheet-like samples are excised from the expanded sheet, the excised samples are overlapped so as not to form gaps, to obtain a measurement sample having a thickness of 25 mm, the external dimension of this measurement sample is measured to 1/100 mm using "DIGIMATIC CALIPER" manufactured by Mitutoyo Corporation, and the apparent volume ($cm^3$) is obtained.

Then, the volume ($cm^3$) of the measurement sample is obtained by the 1-1/2-1 atm method using Air Comparison Pycnometer type 1000 (manufactured by Tokyo Science Co., Ltd.).

By these obtained values and the equation below, an open cell ratio (%) is calculated, and an average of the number of tests (5 times) is obtained.

In addition, the measurement sample is conditioned for 16 hours under the standard atmosphere of JIS K7100-1999, symbol "23/50" (temperature 23°C, relative humidity 50%), class 2, and thereafter, measurement is performed under the same standard atmosphere.

Besides, the air comparison pycnometer is corrected with a standard sphere (large 28.9 cc, small 8.5 cc).

Open cell ratio (%) = 100 $\times$ (apparent volume - volume measured with air comparison pycnometer)/apparent volume

An expansion ratio of the expanded sheet can be obtained by obtaining the apparent density ($\rho$1) of the expanded sheet, obtaining the density (true density: $\rho$0) of the polylactic acid resin composition constituting the expanded sheet, and dividing the true density ($\rho$0) by the above-mentioned apparent density ($\rho$1).

That is, an expansion ratio is obtained by calculation by the equation below.

$$\text{Expansion ratio} = \text{true density } (\rho0)/\text{apparent density } (\rho1)$$

The density of the above-mentioned expanded sheet can be obtained by a method described in JIS K7222: 1999 "Cellular plastics and rubbers - Determination of apparent density", and is specifically measured by a method described below.

(Density Measurement Method)

A sample of 100 cm$^3$ or more is cut from the expanded sheet so as not to change the original cell structure, this sample is conditioned for 16 hours under the standard atmosphere of JIS K7100: 1999, symbol "23/50" (temperature 23°C, relative humidity 50%), class 2, thereafter, the dimension and the mass thereof are measured, and the density is calculated by the following equation:

$$\text{Apparent density } (\text{kg/m}^3) = \text{mass of sample } (\text{kg}) /\text{volume of sample } (\text{m}^3)$$

In addition, for measuring the dimension of the sample, for example, "DIGIMATIC" type CD-15 manufactured by Mitutoyo Corporation can be used.

The density of the polylactic acid resin composition can be obtained by performing measurement based on the Archimedes method (the in-liquid weighing method in JIS K8807: 2012 "Methods of measuring density and specific gravity of solid"), on a sample that has been converted into a non-expanded article by thermal pressing of the expanded sheet.

Since it is preferable that the above-mentioned expanded sheet shows the good formability when a resin molded article is formed, and exerts the excellent strength to the resin molded article after formation, it is preferable that the above-mentioned polylactic acid resin constituting a foam film has not been completely crystallized, and for example, is in the state where crystallization progresses by heating to a glass transition initiation temperature or higher.

It is preferable that the above-mentioned expanded sheet has a crystallization degree of 20% or less, in that a desired shape can be easily imparted, for example, by thermoforming.

A crystallization degree of the above-mentioned expanded sheet is more preferably 19% or less, further preferably 18% or less.

In order to make a resin molded article exert the excellent strength, it is preferable that the above-mentioned expanded sheet is brought into the state where it shows a crystallization degree of 25% or more by being heated.

In order to make a resin molded article exert the excellent strength, it is more preferable that the above-mentioned expanded sheet is brought into the state where it shows a crystallization degree of 30% or more, and it is further preferable that the expanded sheet is brought into the state where it shows a crystallization degree of 35% or more, by being heated.

If a crystallization degree of the above-mentioned expanded sheet is excessively low, or a crystallization degree that is reached by heating of the above-mentioned expanded sheet is excessively high, change in a crystallization degree upon preparation of a resin molded article may become large, or a resin molded article may be brought into the state where it has not been sufficiently crystallized.

From the above, a crystallization degree of the above-mentioned expanded sheet is preferably 8% or more, more preferably 10% or more, further preferably 12% or more, particularly preferably 14% or more.

It is preferable that a crystallization degree that is reached by heating of the above-mentioned expanded sheet is 50% or less.

A crystallization degree of the above-mentioned expanded sheet is more preferably 45% or less, further preferably 40% or less, particularly preferably 38% or less.

A crystallization degree of each of the polylactic acid resin, the expanded sheet, and the resin molded article is obtained as follows:

(Crystallization Degree)

A crystallization degree of each of the polylactic acid resin, the expanded sheet, and the resin molded article is measured using a heat flux differential scanning calorimeter (heat flux DSC) as follows:
Measurement is performed by a method described in JIS K7122: 1987, JIS K7122: 2012 "Testing methods for heat of transitions of plastics".

Provided that a sampling method/temperature conditions are performed as follows:

$5 \pm 0.5$ mg of a sample is filled on a bottom of a measurement container made of aluminum (manufactured by Hitachi High-Tech Science Corporation, product code: GAA-0065) so as not to form gaps, and thereafter, the container is closed with an aluminum lid (manufactured by Hitachi High-Tech Science Corporation, product code: GAA-0064). Then, using a differential scanning calorimeter ("DSC7000X, AS-3" manufactured by Hitachi High-Tech Science Corporation), the closed container is retained at 30°C for 2 minutes under a nitrogen gas flow rate of 20 mL/min, and a DSC curve when a temperature is raised from 30°C to 210°C at a speed of 2°C/min is obtained.

As a standard substance at that time, alumina is used.

Herein, "crystallization degree" is a value obtained by dividing a difference between a heat absorption amount (melting heat amount (J/g)) obtained from an area of an endothermic peak appearing in crystal melting and a crystallization heat amount (J/g) obtained from an area of a crystallization peak, by the theoretical melting heat of a polylactic acid perfect crystal (93 J/g).

A melting heat amount and a crystallization heat amount are calculated using an analytical software attached to a device.

Specifically, a melting heat amount is calculated from a part surrounded by a straight line binding a point at which a DSC curve leaves from a low temperature side base line and a point at which the DSC curve returns again to a high temperature side base line, and the DSC curve.

A crystallization heat amount is calculated from an area of a part surrounded by a straight line binding a point at which a DSC curve leaves from a low temperature side base line and a point at which the DSC curve returns again to a high temperature side, and the DSC curve.

That is, a crystallization degree is obtained from the following equation:

Crystallization degree (%) = [Melting heat amount (J/g) - crystallization heat amount (J/g)]/93 (J/g) $\times$ 100

A crystallization degree that can be reached by heating of the above-mentioned expanded sheet is obtained by dividing the above-mentioned melting heat amount (J/g) by the theoretical melting heat of a polylactic acid perfect crystal (93 J/g).

Crystallization degree that can be reached by expanded sheet (%) = melting heat amount (J/g)/93 (J/g) $\times$ 100

A crystallization degree of the above-mentioned expanded sheet can, for example, be adjusted by use amounts of the above-mentioned crystal nucleating agent and the above-mentioned crystallization accelerator, and conditions in extrusion expansion (resin temperature and cooling conditions immediately after extrusion) .

One example of a method for producing an expanded sheet according to the present embodiment will be described below.

A method for producing a polylactic acid resin expanded sheet according to the present embodiment includes an extrusion step of extrusion expanding a resin composition containing a polylactic acid resin together with a blowing agent to prepare a polylactic acid resin expanded sheet.

As described above, in the present embodiment, the method further includes a modification step of reacting polylactic acid resins together using an organic peroxide as a radical initiator to prepare a modified polylactic acid resin.

In the above-mentioned modification step, the above-mentioned modified polylactic acid resin having a melt tension at 190°C of 5 cN or more and 40 cN or less is prepared using the above-mentioned organic peroxide at a ratio of 0.1 part by mass or more and 2 parts by mass or less, based on 100 parts by mass of the above-mentioned polylactic acid resin.

In the above-mentioned extrusion step, a part or all of the above-mentioned polylactic acid resin is the above-mentioned modified polylactic acid resin, and the above-mentioned polylactic acid resin expanded sheet is prepared using 0.5 part by mass or more and less than 3.0 parts by mass of the above-mentioned crystal nucleating agent and 0.5 part by mass or more and less than 5.0 parts by mass of the above-mentioned crystallization accelerator, based on 100 parts by mass of the polylactic acid resin.

The above-mentioned modification step can be performed by melting and kneading an unmodified polylactic acid resin and an organic peroxide, for example, with a kneader or a twin screw extruder.

In this step, the unmodified polylactic acid resin is heated and melted, and at the same time, the organic peroxide is thermally decomposed to generate a radical, and cutting and crosslinking reactions are caused in a molecule of the polylactic acid resin by the radical, and by performing melting and kneading for a predetermined time, a modified polylactic acid resin with the branch structure and the crosslinked structure formed therein is obtained.

In the above-mentioned modification step, for example, the modified polylactic acid resin may be pelletized immediately thereafter, using a twin screw extruder installed with a granulation die (hot cut die).

A strand die or a T die is installed in the twin screw extruder used in the above-mentioned modification step, and in the above-mentioned modification step, a strand or a sheet of the modified polylactic acid resin is prepared, and thereafter, a step of cutting the strand or the sheet to perform granulation may be performed separately.

In addition, if necessary, the extrusion expansion step may be performed using a tandem extruder, subsequently to the modification step.

In addition, if necessary, the extrusion expansion step may be performed using a tandem extruder, subsequently to the modification step.

For example, the extrusion expansion step in the present embodiment can be performed using an apparatus as shown in Fig. 1.

An apparatus exemplified in Fig. 1 includes a tandem extruder 10, and a circular die CD for discharging a polylactic acid resin composition that has been melted and kneaded in the tandem extruder 10, into a cylindrical form.

Further, this producing apparatus includes a cooling device CL for air-cooling an expanded sheet that has been discharged from the circular die CD into a cylindrical form, a mandrel MD for enlarging a diameter of this cylindrical expanded sheet to a cylinder having the predetermined size, a slit device for slitting the expanded sheet after its passage through the mandrel MD to divide it into two sheets, and a wind-up roller 22 for winding the slitted expanded sheet 1 after its passage through a plurality of rollers 21.

In an upstream extruder (hereinafter, also referred to as "first extruder 10a") of the above-mentioned tandem extruder 10, a hopper 11 for charging a polylactic acid resin that is a raw material of an expanded sheet, and a gas introduction part 12 for supplying a blowing agent such as a hydrocarbon into a cylinder are provided.

On a downstream side of this first extruder 10a, an extruder (hereinafter, also referred to as "second extruder 10b") for melting and kneading a polylactic acid resin composition containing a blowing agent is arranged.

When an extrusion expansion step is performed with such an apparatus, it is also possible to perform modification of a polylactic acid resin with the first extruder 10a, mix, for example, a blowing agent at a terminal end part of the first extruder 10a or a basic end part of the second extruder 10b to prepare a polylactic acid resin composition that is a raw material of an expanded sheet, and perform extrusion expansion from the above-mentioned circular die CD.

The expanded sheet of the present embodiment can be prevented from being completely crystallized until a state where a polylactic acid resin contained in the expanded sheet cannot be crystallized any more, by strengthening cooling with a cooling device CL.

That is, the expanded sheet can be prepared in the state where a crystallization degree is suppressed low, by strengthening cooling with the cooling device CL.

In addition, the expanded sheet of the present embodiment can be prepared in the state where a crystallization degree is suppressed low, by shortening the time until the expanded sheet reaches the mandrel MD, after being extruded from the circular die CD.

The expanded sheet that has been prepared in the state where a crystallization degree is 20% or less, in this way, can be easily deformed by heating, and moreover, a crystal nucleating agent and a crystallization accelerator are contained at an appropriate ratio, and accordingly, occurrence of rapid crystallization is suppressed upon forming.

Further, in the present embodiment, since a polylactic acid resin contained in the expanded sheet is a modified polylactic acid resin, occurrence of rapid crystallization is suppressed upon forming.

Accordingly, the expanded sheet prepared in the present embodiment shows good trackability to the die surface of a forming die, and after forming, crystallization progresses adequately, and thermal deformation thereafter can be hardly caused.

A resin molded article of the present embodiment can, for example, be produced by processing an expanded sheet by a method called thermoforming.

Examples of the above-mentioned thermoforming include vacuum forming, pressure forming, vacuum/pressure forming, matched molding forming, and press forming.

The above-mentioned vacuum forming may be an air slip method or a plug assist method.

In the resin molded article, it is preferable that a polylactic acid resin contained therein is sufficiently crystallized, by being heated at this forming, or by being heated in the state where a shape thereof is retained, after forming.

Specifically, the resin molded article is prepared so that a crystallization degree becomes preferably 80% or more, more preferably 90% or more relative to a finally reachable crystallization degree.

The method for producing the resin molded article is not particularly limited to the method as described above.

In addition, it is not necessary to form the resin molded article using only the expanded sheet of the present embodiment, and the resin molded article may be formed further using a member other than the expanded sheet.

For example, the resin molded article may be such that a resin film or a piece of paper is bonded to an outer peripheral surface of a cup container or a bowl container that have been formed with the expanded sheet of the present embodiment.

The expanded sheet constituting a part or all of the above-mentioned resin molded article does not necessarily have a three-dimensional shape.

For example, the resin molded article may be formed only of a plate-like expanded sheet like a thin wooden box.

The resin molded article in the present embodiment can more remarkably exert the effect of the present invention, by being a resin molded article like a thin wooden box, which easily becomes visually conspicuous only by generation of a slight strain.

That is, it is preferable that the resin molded article in the present embodiment contains a plate-like expanded sheet as a constituent member.

In addition, the present invention is not at all limited to the previously stated exemplifications, and the above-mentioned exemplifications can be appropriately modified.

EXAMPLES

The present invention will be more specifically described below by way of Examples, but the present invention is not at all limited to the following exemplifications.

(Example 1)

(Modification Step)

100 parts by mass of a polylactic acid resin ("Biopolymer Ingeo 4032D" manufactured by Nature Works company, MFR = 4.4 g/10 min, density = 1240 kg/m$^3$), and 0.5 part by mass of t-butyl peroxyisopropyl monocarbonate ("Kayacarbon BIC-75" manufactured by KAYAKU NOURYON CORPORATION, one-minute half-life temperature T1: 158.8°C) were stirred and mixed with a ribbon blender to obtain a mixture.

The resulting mixture was supplied to a twin screw extruder (L/D = 31.5) having a caliber of 57 mm.

A preset temperature of a feed part was set at 170°C, a temperature thereafter was set at 230°C, the above-mentioned mixture was melted and kneaded in a twin screw extruder under the conditions of a rotation number of 150 rpm, and the kneaded product was extruded into a strand shape from a die, with a caliber of 3 mm and the number of holes of 18, attached to a tip of the extruder, at a discharge amount of 50 kg/h.

Then, the extruded strand-like kneaded product was cooled by being passed through a 2 m length cooling water bath containing water at 30°C.

By cutting the resulting strand, modified polylactic acid resin (mPLA) pellets having the melt tension at 190°C of 16 cN were prepared.

(Extrusion Step)

A resin composition containing the modified polylactic acid resin pellets (mPLA) obtained in the modification step, a crystal nucleating agent (talc: "CROWN TALC" manufactured by Matsumura Sangyo Co., Ltd.), and a crystallization accelerator (polyglycerin fatty acid ester (PGFE): "Tirabazole P4" manufactured by Taiyo Kagaku Co., Ltd.) at a mass ratio of 100 : 1 : 1 (mPLA : talc : PGFE) was supplied to an extruder, and kneading was performed in the extruder while heating and melting.

Thereafter, butane (isobutane/normal butane = 70/30) as a blowing agent was pressed into the same extruder, and melted and mixed with the above-mentioned resin composition.

Then, this melt mixture was extrusion expanded from a circular die to obtain a cylindrical expanded article.

The resulting cylindrical expanded article was disposed along an outer peripheral surface of a cooling mandrel, the air was blown to an outer surface thereof with an air ring larger than a diameter thereof, and thereby, the article was cooled and formed, and incised with a cutter at one point on the circumference, to obtain a belt-like expanded sheet.

The resulting expanded sheet had an open cell ratio of 21% and a crystallization degree of 17%.

(Preparation of Resin Molded Article)

A plug assist-type molding machine including male and female gratin container-shaped (container opening (including rib) external dimension: 140 mm, bottom external dimension: 110 mm, container depth external dimension: 35 mm) forming dies was prepared.

Thermoforming was performed by setting a die temperature at 120°C, setting the expanded sheet obtained above in the molding machine, and setting a forming cycle at 6.3 seconds, a preset temperature of a cavity side heater at 290°C, and a preset temperature of a plug side heater at 250°C, to prepare a container (resin molded article).

(Initial Appearance/Crystallization Degree of Resin Molded Article)

The container obtained by thermoforming reflected a shape of the forming die at good precision.
When a crystallization degree of the container was measured, a crystallization degree was found to be 37%.

(Initial Appearance/Crystallization Degree/Hot Water Supply Deformation of Resin Molded Article)

Boiling water at 100°C was poured into the resulting container, hot water was discarded after 3 minutes, and the swollen situation of the bottom of the container was observed.
When the swollen appearance was not seen on the bottom of the container, or when even if swollen, a height thereof was less than 3 mm, this was determined that deformation was sufficiently suppressed, and was determined to be "⊙".
When a swelling height of the bottom of the container was 3 mm or more and less than 6 mm, this was determined to be an acceptable range, and was determined to be "O".
On the other hand, when a swelling height of the bottom of the container was 6 mm or more and less than 9 mm, this was determined to be "problematic", and determined to be "△".
Further, when the bottom of the container had been swollen 9 mm or more, this was determined that deformation was large, and was determined to be "×".
The above assessment results are shown in Table 1.

(Example 2, Comparative Examples 1 and 2)

In the same manner as that of Example 1 except that the contents of the crystal nucleating agent and the crystallization accelerator were changed, and that the cooling conditions after extrusion expansion were changed to change a crystallization degree of the expanded sheet, expanded sheets were prepared and containers were prepared, and assessment was performed as in Example 1.
Results are shown in Table 1.

(Comparative Example 3)

In the same manner as that of Example 1 except that unmodified polylactic acid resin pellets were used in the expansion step, and that the contents of the crystal nucleating agent and the crystallization accelerator were changed, assessment was performed.
However, regarding Comparative Example 3, since the resin had no melt tension, and stable take-off of the sheet could not be performed, an expanded sheet was not obtained.
Results are shown in Table 1.

[Table 1]

| | | | Example 1 | Example 2 | Comparative Example 1 | Comparative Example 2 | Comparative Example 3 |
|---|---|---|---|---|---|---|---|
| Physical properties of modified (unmodified) polylactic acid resin | | Unmodified polylactic acid: 4032D (parts) | 100 | 100 | 100 | 100 | 100 |
| | | Amount of organic peroxide (parts) | 0.5 | 0.5 | 0.5 | 0.5 | 0 |
| | | Melt tension (cN) | 16.0 | 16.0 | 16.0 | 16.0 | 0.9 |
| | | MFR (g/10min) | 3.0 | 3.0 | 3.0 | 3.0 | 4.4 |
| Expanded sheet | Composition of expanded sheet | Modified polylactic acid resin | 100 | 100 | 100 | 100 | 100 |
| | | Talc (parts) | 1 | 1 | 1 | 3 | 1 |
| | | Crystallization accelerator (parts) | 1 | 2 | 0 | 0 | 0 |
| | Expansion ratio | Times | 4.7 | 4.5 | 6.5 | 5.0 | Unable to be sheeted |
| | Open cell ratio of expansion sheet | % | 21 | 21 | 15 | 18 | |
| | Forming cycle | [sec] | 6.3 | 6.3 | 6.3 | 6.3 | |
| | Hot water supply deformation | Container bottom swelling [mm] | 2 | 4 | 7.5 | 11 | |
| | | Assessment | ⊙ | O | △ | × | |
| | Crystallization degree | Expanded sheet % | 17 | 16 | 13 | 15 | |
| | | Resin molded article (container) % | 37 | 36 | 23 | 40 | |

As is also apparent from the above-mentioned table, according to the present invention, there is obtained a resin molded article that can easily retain a predetermined shape.

# EP 3 950 793 B1

## Claims

1. A polylactic acid resin expanded sheet comprising a polylactic acid resin, a crystal nucleating agent, and a crystallization accelerator,

   wherein the polylactic acid resin expanded sheet contains 0.5 part by mass or more and less than 3.0 parts by mass of said crystal nucleating agent, and 0.5 part by mass or more and less than 5.0 parts by mass of said crystallization accelerator, based on 100 parts by mass of said polylactic acid resin,
   wherein only an inorganic crystal nucleating agent is used as said crystal nucleating agent,
   said crystallization accelerator is polyglycerin fatty acid ester,
   said polylactic acid resin is not completely crystallized and is in a state where crystallization progresses by heating to a glass transition initiation temperature or higher,
   a crystallization degree of said polylactic acid resin expanded sheet is 20% or less, and
   said polylactic acid resin expanded sheet shows a crystallization degree of 25% or more by being heated to a glass transition initiation temperature or higher,
   wherein the crystallization degree is determined in accordance with the method described in section (Crystallization Degree) of the description.

2. A resin molded article in which a part or all of the resin molded article includes the polylactic acid resin expanded sheet according to claim 1.

3. A method for producing a polylactic acid resin expanded sheet, which comprises an extrusion step of extrusion expanding a resin composition containing a polylactic acid resin together with a blowing agent to prepare a polylactic acid resin expanded sheet,

   the method further comprising a modification step of reacting polylactic acid resins together using an organic peroxide as a radical initiator to prepare a modified polylactic acid resin,
   wherein in the modification step, said modified polylactic acid resin having a melt tension at 190°C of 5 cN or more and 40 cN or less is prepared using said organic peroxide at a ratio of 0.1 part by mass or more and 2 parts by mass or less, based on 100 parts by mass of said polylactic acid resin, and
   in said extrusion step, a part or all of said polylactic acid resin is said modified polylactic acid resin, and said polylactic acid resin expanded sheet is prepared using said resin composition containing 0.5 part by mass or more and less than 3.0 parts by mass of a crystal nucleating agent and 0.5 part by mass or more and less than 5.0 parts by mass of a crystallization accelerator, based on 100 parts by mass of the polylactic acid resin,
   wherein only an inorganic crystal nucleating agent is used as said crystal nucleating agent,
   wherein said crystallization accelerator is polyglycerin fatty acid ester, and
   wherein the melt tension is determined in accordance with the method described in section (Method of Measuring Melt Tension) of the description.

## Patentansprüche

1. Expandierte Polymilchsäureharzfolie, umfassend ein Polymilchsäureharz, einen Kristallisationskeimbildner, und einen Kristallisationsbeschleuniger,

   wobei die expandierte Polymilchsäureharzfolie 0,5 Masseteile oder mehr und weniger als 3,0 Masseteile des Kristallisationskeimbildners, und 0,5 Masseteile oder mehr und weniger als 5,0 Masseteile des Kristallisationsbeschleunigers, bezogen auf 100 Masseteile des Polymilchsäureharzes, enthält,
   wobei ausschließlich ein anorganischer Kristallisationskeimbildner als der Kristallisationskeimbildner verwendet wird,
   wobei der Kristallisationsbeschleuniger ein Polyglycerinfettsäureester ist,
   wobei das Polymilchsäureharz nicht vollständig kristallisiert ist und sich in einem Zustand befindet, in dem die Kristallisation durch Erwärmen auf eine Initiierungstemperatur des Glasübergangs oder höher fortschreitet,
   wobei ein Kristallisationsgrad der expandierten Polymilchsäureharzfolie 20 % oder weniger beträgt, und
   wobei die expandierte Polymilchsäureharzfolie einen Kristallisationsgrad von 25 % oder mehr zeigt, wenn sie auf eine Initiierungstemperatur des Glasübergangs oder höher erwärmt wird,
   wobei der Kristallisationsgrad gemäß dem im Abschnitt (Kristallisationsgrad) der Beschreibung beschriebenen Verfahren bestimmt wird.

**2.** Harzformartikel, bei dem der Harzformartikel ganz oder teilweise die expandierte Polymilchsäureharzfolie nach Anspruch 1 einschließt.

**3.** Verfahren zur Herstellung einer expandierten Polymilchsäureharzfolie, das einen Extrusionsschritt des Extrusionsschäumens einer Harzzusammensetzung, die ein Polymilchsäureharz zusammen mit einem Treibmittel enthält, umfasst, zum Herstellen einer expandierten Polymilchsäureharzfolie,

wobei das Verfahren weiter einen Modifizierungsschritt umfasst, bei dem Polymilchsäureharze unter Verwendung eines organischen Peroxids als Radikalinitiator miteinander reagieren, um ein modifiziertes Polymilchsäureharz herzustellen,

wobei im Modifizierungsschritt das modifizierte Polymilchsäureharz, das eine Schmelzspannung bei 190°C von 5 cN oder mehr und 40 cN oder weniger aufweist, unter Verwendung des organischen Peroxids in einem Verhältnis von 0,1 Masseteilen oder mehr und 2 Masseteilen oder weniger, bezogen auf 100 Masseteile des Polymilchsäureharzes, hergestellt wird, und

im Extrusionsschritt das Polymilchsäureharz ganz oder teilweise das modifizierte Polymilchsäureharz ist, und die expandierte Polymilchsäureharzfolie unter Verwendung der Harzzusammensetzung, die 0,5 Masseteile oder mehr und weniger als 3,0 Masseteile eines Kristallisationskeimbildners und 0,5 Masseteile oder mehr und weniger als 5,0 Masseteile eines Kristallisationsbeschleunigers, bezogen auf 100 Masseteile des Polymilchsäureharzes, enthält, hergestellt wird,

wobei ausschließlich ein anorganischer Kristallisationskeimbildner als der Kristallisationskeimbildner verwendet wird,

wobei der Kristallisationsbeschleuniger ein Polyglycerinfettsäureester ist, und

wobei die Schmelzspannung gemäß dem im Abschnitt (Messverfahren für die Schmelzspannung) der Beschreibung beschriebenen Verfahren bestimmt wird.

**Revendications**

**1.** Feuille expansée de résine d'acide polylactique comprenant une résine d'acide polylactique, un agent de nucléation de cristal et un accélérateur de cristallisation,

dans laquelle la feuille expansée de résine d'acide polylactique contient 0,5 part en masse ou plus et moins de 3,0 parts en masse dudit agent de nucléation de cristal, et 0,5 part en masse ou plus et moins de 5,0 parts en masse dudit accélérateur de cristallisation, sur la base de 100 parts en masse de ladite résine d'acide polylactique,

dans laquelle seul un agent de nucléation de cristal inorganique est utilisé en tant que dit agent de nucléation de cristal,

ledit accélérateur de cristallisation est un ester d'acide gras de polyglycérine,

ladite résine d'acide polylactique n'est pas complètement cristallisée et est dans un état où la cristallisation progresse par chauffage à une température de début de transition vitreuse ou plus,

un degré de cristallisation de ladite feuille expansée de résine d'acide polylactique est de 20 % ou moins, et ladite feuille expansée de résine d'acide polylactique présente un degré de cristallisation de 25 % ou plus en étant chauffée à une température de début de transition vitreuse ou plus,

dans laquelle le degré de cristallisation est déterminé conformément au procédé décrit dans la section (Degré de cristallisation) de la description.

**2.** Article moulé en résine dans lequel une partie ou la totalité de l'article moulé en résine inclut la feuille expansée de résine d'acide polylactique selon la revendication 1.

**3.** Procédé de production d'une feuille expansée de résine d'acide polylactique, qui comprend une étape d'extrusion consistant à soumettre une composition de résine contenant une résine d'acide polylactique conjointement avec un agent gonflant à une expansion par extrusion afin de préparer une feuille expansée de résine d'acide polylactique,

le procédé comprenant en outre une étape de modification consistant à faire réagir ensemble des résines d'acide polylactique en utilisant un peroxyde organique comme initiateur radicalaire afin de préparer une résine d'acide polylactique modifiée,

dans lequel, à l'étape de modification, ladite résine d'acide polylactique modifiée présentant une tension de fusion à 190 °C de 5 cN ou plus et de 40 cN ou moins est préparée en utilisant ledit peroxyde organique à un rapport de 0,1 part en masse ou plus et 2 parts en masse ou moins, sur la base de 100 parts en masse de ladite résine d'acide polylactique, et

à ladite étape d'extrusion, une partie ou la totalité de ladite résine d'acide polylactique est ladite résine d'acide polylactique modifiée, et ladite feuille expansée de résine d'acide polylactique est préparée en utilisant ladite composition de résine contenant 0,5 part en masse ou plus et moins de 3,0 parts en masse d'un agent de nucléation de cristal et 0,5 part en masse ou plus et moins de 5,0 parts en masse d'un accélérateur de cristallisation, sur la base de 100 parts en masse de la résine d'acide polylactique,

dans lequel seul un agent de nucléation de cristal inorganique est utilisé en tant que dit agent de nucléation de cristal,

dans lequel ledit accélérateur de cristallisation est un ester d'acide gras de polyglycérine, et

dans lequel la tension de fusion est déterminée conformément au procédé décrit dans la section (Procédé de mesure de tension de fusion) de la description.

Fig. 1

**EP 3 950 793 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019058551 A
- WO 2006121056 A
- JP 2013221096 A

### Non-patent literature cited in the description

- Cellular plastics and rubbers - Determination of apparent density. *JIS K7222*, 1999
- Methods of measuring density and specific gravity of solid. *JIS K8807*, 2012
- Testing methods for heat of transitions of plastics. *JIS K7122*, 2012